# EUROPEAN PATENT APPLICATION

(11) **EP 4 546 512 A1**
(43) Date of publication of application: **30.04.2025**
(21) Application number: 23831408.2
(22) Date of filing: 26.06.2023
(51) Int. Cl.: H01M 10/658, F16L 59/02, H01M 10/625, H01M 10/643, H01M 10/647, H01M 10/651, H01M 10/6555

(54) **HEAT TRANSFER SUPPRESSION SHEET AND BATTERY PACK**

(30) Priority: 27.06.2022 JP 2022103045
(71) Applicant: IBIDEN CO., LTD., Ogaki-shi, Gifu 503-8604 (JP)
(72) Inventor: TAKAHASHI, Naoki, Ibi-gun, Gifu 501-0695 (JP)
(74) Representative: Hoffmann Eitle
(86) International application number: PCT/JP2023/023682
(87) International publication number: WO 2024/004968

(57) **Abstract**

There are provided a heat transfer suppression sheet which has excellent heat insulating properties and also prevents the infiltration of water, which makes it possible to prevent ignition and the like due to a short circuit between battery cells, and preferably makes it possible to prevent a decrease in heat insulating properties due to the infiltration of the electrolytic solution, and a battery pack having the heat transfer suppression sheet. A heat transfer suppression sheet (10) interposed between a plurality of battery cells contains at least one kind of fiber (glass fiber (1)) selected from an inorganic fiber and an organic fiber, and a liquid repellent substance (2) having a surface tension smaller than a surface tension of water.

## Description

### TECHNICAL FIELD

The present invention relates to a heat transfer suppression sheet and a battery pack including the heat transfer suppression sheet.

### BACKGROUND ART

In recent years, the development of electric vehicles or hybrid vehicles which are driven by an electric motor has been actively promoted from the viewpoint of environmental protection. A battery pack in which a plurality of battery cells are connected in series or in parallel is mounted in the electric vehicle, the hybrid vehicle, or the like, where the battery pack is for serving as a power source for an electric motor for driving.

In addition, a lithium ion secondary battery that can have a high capacity and a high output as compared with a lead storage battery, a nickel hydrogen battery, or the like is mainly used for the battery cell. In addition, in a case where a certain battery cell causes such thermal runaway that the temperature of the battery cell rapidly rises and even thereafter, heat generation continues due to internal short-circuiting, overcharging, or the like of the battery, there is a concern that the heat from the battery cell that has caused thermal runaway propagates to adjacent other battery cells, which causes thermal runaway of the other battery cells.

As a method of suppressing the spreading of fire from the battery cell that has caused such thermal runaway as described above, a method of disposing a heat insulating material between battery cells is generally performed.

For example, Patent Literature 1 discloses a heat insulating material having a composite layer including a fiber sheet and a silica aerogel, in which the fiber sheet is bent and laminated. Patent Literature 1 describes that the heat insulating sheet can be allowed to follow a change in a gap between battery cells due to the expansion and contraction of the battery cells.

### CITATION LIST

### PATENT LITERATURE

Patent Literature 1: JP2021-34278A

### SUMMARY OF INVENTION

### TECHNICAL PROBLEM

By the way, in the battery pack (battery unit) in the related art, heat generation and cooling are repeated in association with the expansion and contraction of the battery cell during charging and discharging or the like of the battery cell. Thus, dew condensation water may be generated inside the battery case. In addition, when the generated dew condensation water infiltrates the heat insulating material, the insulating properties of the heat insulating material are reduced, and thus there is a concern that the adjacent battery cells may be short-circuited and may ignite. In addition, in a case where the battery cell is damaged due to thermal runaway, the heat insulating properties of the heat insulating material are significantly reduced when an electrolytic solution inside the battery cell infiltrates the heat insulating material in a high temperature state, which causes a chain of thermal runaway.

In the above-described heat insulating material disclosed in Patent Literature 1, it is not possible to prevent the deterioration of insulating properties due to the infiltration of dew condensation water and the deterioration of heat insulating properties due to the infiltration of the electrolytic solution.

The present invention has been made in consideration of the above-described problems, and an object of the present invention is to provide a heat transfer suppression sheet which has excellent heat insulating properties and also prevents the infiltration of water, which makes it possible to prevent ignition and the like due to a short circuit between battery cells, and preferably makes it possible to prevent a decrease in heat insulating properties due to the infiltration of the electrolytic solution, and a battery pack having the heat transfer suppression sheet.

### SOLUTION TO PROBLEM

The above-described object of the present invention is achieved by the following configuration of [1] pertaining to a heat transfer suppression sheet.
[1] A heat transfer suppression sheet to be interposed between a plurality of battery cells, the heat transfer suppression sheet containing:
   at least one kind of fiber selected from an inorganic fiber and an organic fiber; and
   a liquid repellent substance having a surface tension smaller than a surface tension of water.
   In addition, the preferred embodiments pertaining to the heat transfer suppression sheet according to the present invention relate to the following [2] to [12].
[2] The heat transfer suppression sheet according to [1], in which the heat transfer suppression sheet contains inorganic particles, and at least a part of the inorganic particles are the liquid repellent substance.
[3] The heat transfer suppression sheet according to [2], in which the liquid repellent substance is hydrophobic silica.
[4] The heat transfer suppression sheet according to [1], in which the heat transfer suppression sheet contains inorganic particles, and
   the liquid repellent substance adheres to at least a part of a surface of the heat transfer suppression sheet, a surface of the inorganic particle in an inside of the heat transfer suppression sheet, and a surface of the fiber in an inside of the heat transfer suppression sheet.
[5] The heat transfer suppression sheet according to [4], in which the liquid repellent substance is at least one selected from paraffin-based oils, naphthene-based oils, a hydrocarbon-based synthetic oil, an ester-based synthetic oil, animal and vegetable oils and fats, a silicone resin, a fluororesin, a rosin-based sizing agent, and an alkyl ketene dimer sizing agent.
[6] The heat transfer suppression sheet according to [4] or [5], in which the inorganic particle is a particle composed of at least one kind of inorganic material selected from an oxide particle, a carbide particle, a nitride particle, and an inorganic hydrate particle.
[7] The heat transfer suppression sheet according to [6], in which the inorganic particle includes at least one kind of particle selected from a dry type silica particle and a silica aerogel.
[8] The heat transfer suppression sheet according to [7], in which the inorganic particles further include at least one kind of particle selected from titania, zircon, zirconia, silicon carbide, zinc oxide, and alumina.
[9] The heat transfer suppression sheet according to any one of [1] to [8], in which the surface tension of the liquid repellent substance is smaller than a surface tension of an electrolytic solution contained in the battery cell.
[10] The heat transfer suppression sheet according to any one of [1] to [9], in which the surface tension of the liquid repellent substance is 45 mN/m or less.
[11] The heat transfer suppression sheet according to [10], in which the liquid repellent substance is at least one selected from a silicone resin and a fluororesin.
[12] The heat transfer suppression sheet according to any one of [1] to [11], in which the heat transfer suppression sheet has a plurality of three-dimensionally linked empty holes, and the empty holes are open toward a surface of the heat transfer suppression sheet.
   In addition, the above-described object of the present invention is achieved by the following configuration of [13] pertaining to a battery pack.
[13] A battery pack including:
   a plurality of battery cells; and
   the heat transfer suppression sheet according to any one of [1] to [12],
   in which the plurality of battery cells are connected in series or in parallel.

### ADVANTAGEOUS EFFECTS OF INVENTION

The heat transfer suppression sheet according to the present invention has a liquid repellent substance on at least a part of the surface and the inside, and the surface tension of the liquid repellent substance is smaller than the surface tension of water. Thus, it is possible to suppress the infiltration of dew condensation water or the like generated outside the heat transfer suppression sheet into the inside of the heat transfer suppression sheet. Therefore, it is possible to prevent the insulating properties of the heat transfer suppression sheet from being reduced and the adjacent battery cells from being short-circuited and ignited. In addition, in a case where the surface tension of the liquid repellent substance is smaller than the surface tension of the electrolytic solution used in the battery cell, the infiltration of the electrolytic solution into the inside of the heat transfer suppression sheet can also be suppressed, and the decrease in the heat insulating properties can be prevented.

The battery pack according to the present invention has excellent heat insulating properties as described above and has a heat transfer suppression sheet in which the infiltration of dew condensation water or an electrolytic solution is suppressed. Thus, it is possible to prevent short-circuiting between battery cells in the battery pack and it is also possible to suppress the thermal runaway of the battery cell or the expansion of flame to the outside of the battery case.

### BRIEF DESCRIPTION OF DRAWINGS

Fig. 1 is a schematic cross-sectional view showing a structure of a heat transfer suppression sheet according to a first embodiment of the present invention.
Fig. 2 is a cross-sectional view schematically showing a battery pack having a heat transfer suppression sheet according to the first embodiment of the present invention.
Fig. 3 is a schematic cross-sectional view showing a structure of a heat transfer suppression sheet according to a second embodiment of the present invention.
Fig. 4 is a photographic image substituting for a drawing, which shows a cross section of a heat insulating material that can be used for the heat transfer suppression sheet according to the embodiment of the present invention.
Fig. 5 is a schematic cross-sectional view showing a structure in a case where the heat transfer suppression sheet according to the second embodiment has empty holes that are three-dimensionally linked.
Fig. 6 is a schematic cross-sectional view showing a state in which the heat transfer suppression sheet according to the second embodiment is disposed adjacent to a battery cell.

### DESCRIPTION OF EMBODIMENTS

The inventors of the present invention carried out intensive studies on a heat transfer suppression sheet that can solve the above-described problems.

As a result, it was found that in a case where a liquid repellent substance is externally added to the surface of the heat transfer suppression sheet or a liquid repellent substance is internally added to the inside of the heat transfer suppression sheet, and a liquid repellent substance having a surface tension smaller than the surface tension of water is used as the liquid repellent substance, it is possible to prevent dew condensation water generated outside the heat transfer sheet from infiltrating the inside of the sheet. In addition, it was also found that, for example, in a case where the heat transfer sheet is disposed in the vicinity of the battery cell, the electrolytic solution leaking out from the battery cell can be suppressed from infiltrating the inside of the heat transfer suppression sheet, and it is possible to prevent the decrease in the heat insulating properties when a liquid repellent substance having a surface tension smaller than the surface tension of the electrolytic solution filled inside the battery cell is used as the liquid repellent substance.

Hereinafter, a heat transfer suppression sheet according to an embodiment of the present invention, a manufacturing method therefor, and a battery pack will be described in detail. It is noted that the present invention is not limited to the embodiments described below, and the present invention can be implemented with any modifications without departing from the scope of the present invention.

### [Heat transfer suppression sheet]

### <First embodiment>

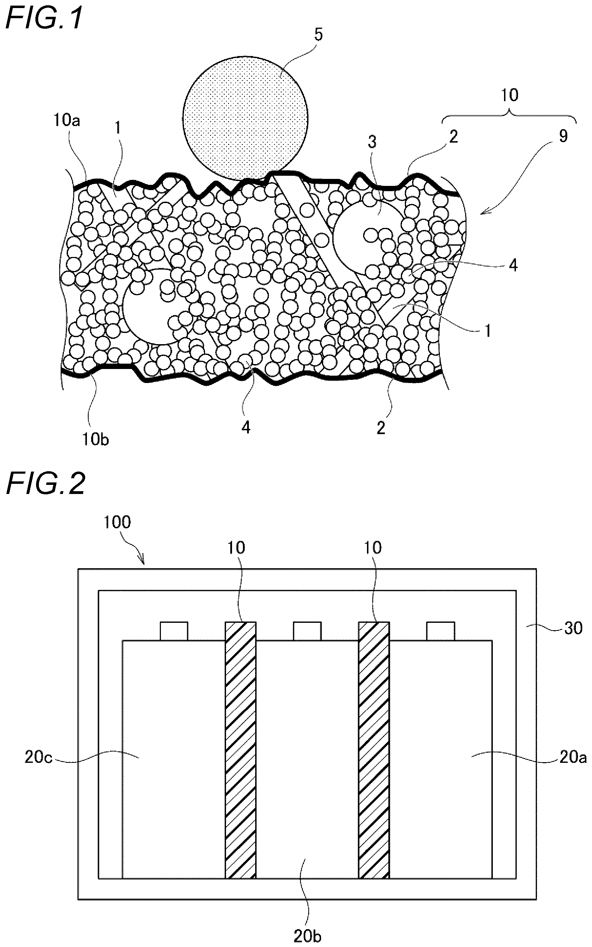

Fig. 1 is a schematic cross-sectional view showing a structure of a heat transfer suppression sheet according to a first embodiment of the present invention. In addition, Fig. 2 is a cross-sectional view schematically showing a battery pack having a heat transfer suppression sheet according to the first embodiment of the present invention.

As shown in Fig. 1, a liquid repellent substance 2 is allowed to adhere to a surface of a heat insulating material 9 in a heat transfer suppression sheet 10 according to the present embodiment. The heat insulating material 9 has a nano silica 4 and a titania 3 as inorganic particles and also has a glass fiber 1 as a fiber. It is noted that the liquid repellent substance 2 has a surface tension smaller than the surface tension of water and is, for example, a rosin-based sizing agent.

As a specific use form of the heat transfer suppression sheet 10, the heat transfer suppression sheet 10 can be used to be interposed between a plurality of battery cells 20a, 20b, and 20c as shown in Fig. 2. In addition, the plurality of battery cells 20a, 20b, and 20c are housed in a battery case 30 in a state (the state of being connected is not shown) in which the plurality of battery cells 20a, 20b, and 20c are connected in series or in parallel, whereby a battery pack 100 is constituted. It is noted that although, for example, a lithium ion secondary battery is suitably used for the battery cells 20a, 20b, and 20c, the present invention is not particularly limited thereto, and other secondary batteries can also be applied thereto.

In the battery pack 100 configured as described above, the temperature of the battery cells 20a, 20b, and 20c rises during operation (during charging and discharging), and the temperature in the battery case 30 also rises. Thereafter, in a case where the operation of the battery pack 100 is stopped and the air in the battery case 30 is cooled, dew condensation water adheres to the battery cells 20a, 20b, and 20c or the inner surface of the battery case 30.

At this moment, in the heat transfer suppression sheet 10 according to the first embodiment, the liquid repellent substance 2 having a surface tension smaller than the surface tension of water adheres to the surface of the heat transfer suppression sheet 10, and since the liquid repellent substance 2 has a property of repelling water, it is possible to suppress the infiltration of the dew condensation water 5 into the inside of the heat transfer suppression sheet 10. Therefore, it is possible to suppress a decrease in the insulating properties of the heat transfer suppression sheet, and it is possible to prevent the adjacent battery cells, for example, the battery cell 20a and the battery cell 20b from short-circuiting and igniting.

In addition, in the battery pack 100, for example, in a case where the battery cell 20c expands due to thermal runaway and is damaged, so that the electrolytic solution filled in the battery cell 20c flows out, the heat insulating properties of the heat insulating material are significantly reduced, which causes a chain of thermal runaway, when this electrolytic solution infiltrates the heat insulating material in a high temperature state. In such a case, when a fluororesin is used as the liquid repellent substance 2, the fluororesin has a surface tension smaller than the surface tension of the electrolytic solution filled in the battery cells 20a, 20b, and 20c, for example, dimethyl carbonate (DMC). Therefore, liquid repellency is exhibited not only to the dew condensation water 5 but also to the electrolytic solution, and it is possible to suppress the infiltration of the electrolytic solution into the inside of the heat transfer suppression sheet 10 and it is possible to prevent a chain of thermal runaway.

In the first embodiment, in a case where the liquid repellent substance 2 is provided on the surfaces 10a and 10b of the heat transfer suppression sheet 10, it is possible to obtain an effect of preventing the infiltration of the dew condensation water or the electrolytic solution into the inside of the heat transfer suppression sheet 10 when the liquid repellent substance 2 adheres to at least a part of the surfaces 10a and 10b, as compared with a case where the liquid repellent substance 2 does not adhere thereto. However, it is preferable that the liquid repellent substance 2 adheres such that the liquid repellent substance 2 completely covers the entire surfaces 10a and 10b. When the liquid repellent substance 2 adheres to the entire surfaces 10a and 10b of the heat transfer suppression sheet 10 as described above, it is possible to reliably prevent the dew condensation water or the electrolytic solution from infiltrating the inside of the heat transfer suppression sheet 10. A manufacturing method for the heat transfer suppression sheet 10 according to the first embodiment will be described later.

In addition, since the heat transfer suppression sheet 10 according to the present embodiment has, as the fiber, the glass fiber 1 which is an inorganic fiber, the glass fiber 1 acts as a backbone of the heat transfer suppression sheet 10, which makes it possible to obtain a high compressive strength. As shown in Fig. 2, the heat transfer suppression sheet 10 according to the present embodiment is interposed between the plurality of battery cells 20a, 20b, and 20c. However, the battery cells 20a, 20b, and 20c which are disposed adjacent to the heat transfer suppression sheet 10 expand or contract due to charging and discharging or the like. At this moment, since the heat transfer suppression sheet 10 has a high compressive strength, the heat transfer suppression sheet 10 can maintain the shape thereof without being significantly deformed even in a case of being pressed by the battery cells 20a, 20b, and 20c. Therefore, it is possible to prevent a decrease in heat insulating properties due to the compression and the resultant thinning of the heat transfer suppression sheet 10 or the falling off of the inorganic particles or the like from the heat transfer suppression sheet 10. Further, since the inorganic fiber has a high high-temperature strength, the shape of the heat transfer suppression sheet 10 can be maintained even in a case where the heat transfer suppression sheet 10 is exposed to a high temperature.

Furthermore, the heat transfer suppression sheet 10 according to the present embodiment contains the nano silica 4 and the titania 3 as the inorganic particles, and these inorganic particles exhibit heat insulating properties in a wide temperature range, whereby it is possible to obtain excellent heat insulating properties.

### <Second embodiment>

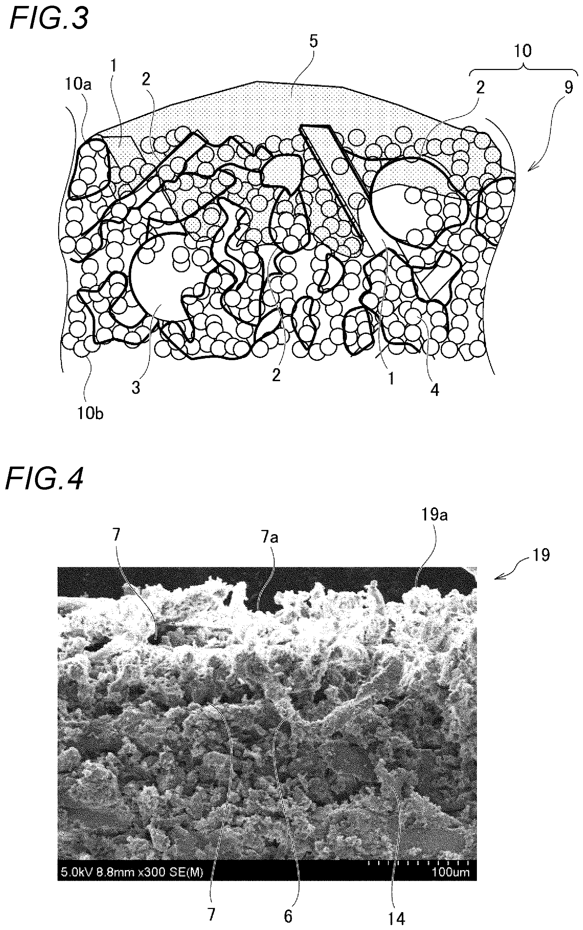

Fig. 3 is a schematic cross-sectional view showing a structure of a heat transfer suppression sheet according to a second embodiment of the present invention. The heat transfer suppression sheet 10 according to the first embodiment is such that the liquid repellent substance 2 is allowed to adhere to the surface of the heat insulating material 9. However, in the second embodiment, the region in which the liquid repellent substance 2 has adhered is different from that of the first embodiment. However, since the second embodiment is the same as the first embodiment in terms of other points such as materials, in Fig. 3, the same elements as those in Fig. 1 are denoted by the same reference numerals, and detailed description thereof will be omitted.

As shown in Fig. 3, the heat transfer suppression sheet 10 according to the second embodiment has a so-called internal addition type structure in which the liquid repellent substance 2 has adhered to at least a part of the surface of the fiber (glass fiber 1) or the inorganic particles (nano silica 4 and titania 3) in the inside of the heat insulating material 9.

In the heat transfer suppression sheet 10 according to the second embodiment, which is configured as described above, the liquid repellent substance 2 is internally added thereto. Thus, although the dew condensation water 5 or the electrolytic solution may infiltrate from the surfaces 10a and 10b to a certain depth, it is possible to prevent the dew condensation water 5 or the electrolytic solution from completely permeating. Therefore, it is possible to suppress a decrease in the insulating properties of the heat transfer suppression sheet, it is possible to prevent ignition due to a short circuit between adjacent battery cells, and it is also possible to prevent a decrease in heat insulating properties due to the infiltration of the electrolytic solution having a high temperature.

In addition, as shown in the second embodiment, when the liquid repellent substance 2 is internally added to the heat transfer suppression sheet 10, the infiltration of the dew condensation water 5 can be blocked in the middle of the process of infiltration even in a case where the surfaces 10a and 10b of the heat transfer suppression sheet 10 are damaged.

It is noted that as shown in the second embodiment, in a case where the liquid repellent substance 2 is allowed to adhere to at least a part of the surface of the fiber (glass fiber 1) or the inorganic particles (nano silica 4 and titania 3) in the inside of the heat insulating material 9 and the liquid repellent substance 2 is also allowed to adhere to the surface of the heat insulating material 9 as shown in the first embodiment, it is possible to obtain a heat transfer suppression sheet having excellent effects obtained from both the first embodiment and the second embodiment.

### <Third embodiment>

A third embodiment will be described with reference to Fig. 1, as not illustrated in the drawing. The heat transfer suppression sheet 10 according to the third embodiment is not a heat transfer suppression sheet in which the liquid repellent substance 2 is allowed to adhere to the surface as shown in Fig. 1, but it is a heat transfer suppression sheet in which inorganic particles having liquid repellency are used. That is, at least a part of the inorganic particles in the heat insulating material 9 is a liquid repellent substance. Examples of such an inorganic particle include hydrophobic silica (fumed silica).

Even in the third embodiment configured in this way, since the inorganic particles having liquid repellency are present on the surface, it is possible to easily prevent the infiltration of the dew condensation water 5 into the inside without implementing out a step of allowing the liquid repellent substance 2 to adhere to the surface of the heat transfer suppression sheet 10.

It is noted that in a case where the heat transfer suppression sheet 10 is manufactured using only inorganic particles composed of the liquid repellent substance 2 without including at least one kind of fiber selected from the inorganic fiber and the organic fiber, the inorganic particles aggregate with each other, so that cracking is likely to occur if the dew condensation water 5 infiltrates the inside of the heat transfer suppression sheet 10. In the present embodiment, since the fibers (glass fibers 1) are included, the aggregation of the inorganic particles is suppressed, which makes it possible to prevent the occurrence of cracking.

Next, the heat insulating material that can be used for the heat transfer suppression sheet according to the embodiment of the present invention will be described in more detail. Fig. 4 is a photographic image substituting for a drawing, which shows a cross section of a heat insulating material that can be used for the heat transfer suppression sheet according to the embodiment of the present invention. A heat insulating material 19 shown in Fig. 4 includes inorganic particles 14 and an organic fiber 6. As the inorganic particles 14, nano silica, titania, and the like can be used as shown in the first and second embodiments. In addition, as the organic fiber 6, polyethylene terephthalate (PET) fiber or the like can be used. Further, as shown in the first and second embodiments, an inorganic fiber such as the glass fiber 1 may be included.

In addition, the heat insulating material 19 has a plurality of three-dimensionally linked empty holes 7 between the inorganic particles 14, between the inorganic particles 14 and the organic fiber 6, and the like. It is noted that at least a part of the empty holes 7 has an opening portion 7a that communicates with a surface 19a of the heat insulating material 19 and is open outward.

As shown in Fig. 4, the inorganic particles 14 are exposed and extremely fine unevenness is formed on the surface 19a of the heat insulating material 19 that is used in the present embodiment. Thus, the heat insulating material 19 innately has a structure having water repellency. In addition to this, in the first and second embodiments, a liquid repellent substance is allowed to adhere to the surface 19a of the heat insulating material 19 or a liquid repellent substance is allowed to adhere to the surface of the inorganic particle 14 or the organic fiber 6 inside the heat insulating material, and in the third embodiment, inorganic particles composed of a liquid repellent substance are used. Therefore, the effect of preventing the infiltration of the dew condensation water or the electrolytic solution can be significantly increased as compared with a case where a liquid repellent substance is applied to a heat insulating material that does not contain a predetermined amount of inorganic particles and does not have fine unevenness formed on the surface.

It is noted that as shown in Fig. 4, when the heat insulating material 19 has the three-dimensionally linked empty holes 7 and the empty holes 7 have the opening portion 7a, the liquid repellent substance is likely to infiltrate the inside of the heat insulating material 19 through the opening portion 7a in a case where the liquid repellent substance is applied from the surface side of the heat insulating material 19. In particular, in a case where hydrophobic silica is used as the inorganic particles 14, the inorganic particles 14 exhibit liquid repellency, which may cause the adhesion to be difficult, when an attempt is made to allow a liquid repellent substance to further adhere from the surface of the heat insulating material 19. On the other hand, as shown in Fig. 4, when the empty holes 7 having the opening portion 7a are present in the heat insulating material 19, it is easy to make the liquid repellent substance infiltrate the inside of the heat insulating material 19, which makes it possible to improve the liquid repellency.

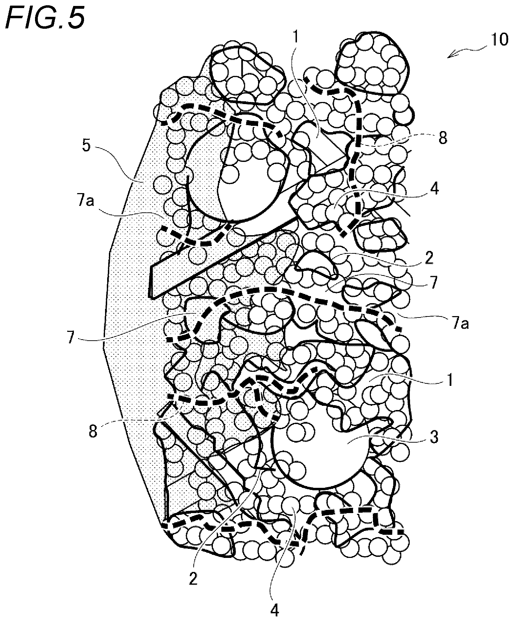

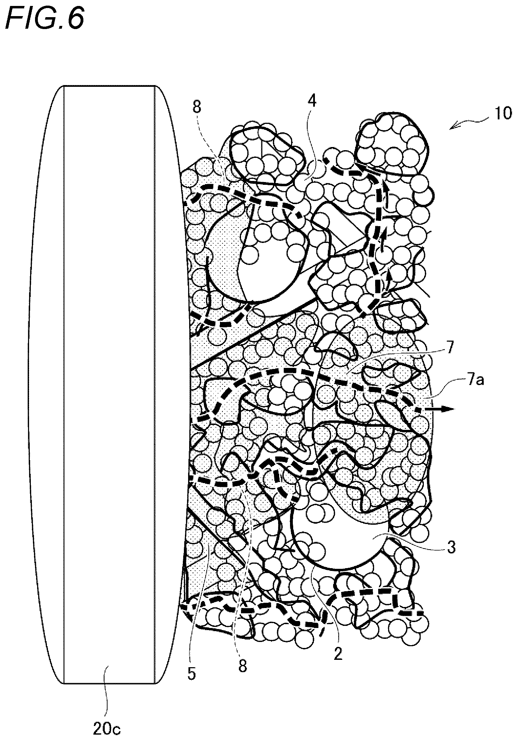

Fig. 5 is a schematic cross-sectional view showing a structure in a case where the heat transfer suppression sheet according to the second embodiment has empty holes that are three-dimensionally linked. In addition, Fig. 6 is a schematic cross-sectional view showing a state in which the heat transfer suppression sheet according to the second embodiment is disposed adjacent to a battery cell.

As shown in Fig. 5, when the heat transfer suppression sheet 10 has the three-dimensionally linked empty holes 7 and the empty holes 7 have the opening portion 7a, an inflow and outflow water path 8 that allows the opening portions 7a and the empty holes 7 to communicate with each other is formed. Therefore, the dew condensation water 5 can be discharged to the outside through the inflow and outflow water path 8 even in a case where the dew condensation water 5 infiltrates the inside of the heat transfer suppression sheet 10 from the opening portion 7a of the empty holes 7 or other portions.

In addition, as shown in Fig. 6, when the temperature of the battery cell 20c rises during operation and the temperature of the heat transfer suppression sheet 10 also rises to some extent, the water present inside the heat transfer suppression sheet 10 is vaporized to form water vapor, and the water vapor can be discharged to the outside through the inflow and outflow water path 8. Further, in a case where the battery cell 20c expands during operation, the interval between the battery cell 20c and the battery cell 20b, which is not shown in Fig. 6, is narrowed, and the heat transfer suppression sheet 10 is pressed. At this moment, when the water infiltrates the heat transfer suppression sheet 10, the dew condensation water 5 is likely to be discharged through the inflow and outflow water path 8.

Hereinafter, the materials constituting the heat transfer suppression sheet according to the present embodiment will be described in detail.

### <Liquid repellent substance>

The liquid repellent substance 2 is an important component having an effect of preventing the infiltration of the dew condensation water 5 into the inside of the heat transfer suppression sheet 10. In order to prevent the infiltration of the dew condensation water 5, the surface tension of the liquid repellent substance 2 needs to be a liquid repellent substance having a surface tension smaller than the surface tension of water. In addition, when the surface tension thereof is set to be smaller than the surface tension of the electrolytic solution contained in the battery cell disposed in the vicinity of the heat transfer suppression sheet 10, it is also possible to prevent the infiltration of the electrolytic solution.

The surface tension of water at 25°C is about 72.0 (mN/m). Thus, the specific value of the surface tension of the liquid repellent substance is, for example, 70.0 (mN/m) or less, and preferably 65 (mN/m) or less. In addition, in order to suppress the infiltration of the electrolytic solution, the surface tension of the liquid repellent substance is more preferably 45 (mN/m) or less, and still more preferably 25 (mN/m) or less.

Examples of the liquid repellent substance include a water repellent agent, an oil repellent agent, and a sizing agent, which are generally used.

Specific examples of the water repellent agent include water repellent agents such as paraffin-based oils, naphthene-based oils, a hydrocarbon-based synthetic oil, an ester-based synthetic oil, and animal and vegetable oils and fats. In addition, specific examples of the oil repellent agent include a silicone resin and a fluororesin. Further, specific examples of the sizing agent include a rosin (pine resin)-based sizing agent and an alkyl ketene dimer (AKD) sizing agent.

Among these liquid repellent substances, examples of the liquid repellent substance having a surface tension smaller than the surface tension of the electrolytic solution include a silicone resin and a fluororesin. It is noted that the surface tension of the silicone resin is 16 to 30 (mN/m), and the surface tension of the fluororesin is 10 to 25 (mN/m).

It is noted that as shown in the third embodiment, inorganic particles can be used as the liquid repellent substance. In this case, examples of the liquid repellent substance include hydrophobic silica (fumed silica).

### (Content of liquid repellent substance)

In the present embodiment, in a case where the content of the liquid repellent substance 2 with respect to the total mass of the heat transfer suppression sheet is appropriately controlled, sufficient liquid repellency can be obtained with respect to the dew condensation water 5 and the electrolytic solution.

The content of the liquid repellent substance 2 is preferably 5% by mass or more, and more preferably 10% by mass or more with respect to the total mass of the heat transfer suppression sheet 10. In addition, when the content of the liquid repellent substance 2 is too large, the content of the inorganic particles or the fiber is relatively reduced. Thus, in order to obtain the desired heat insulating performance, the content of the liquid repellent substance 2 is preferably 35% by mass or less and more preferably 20% by mass or less with respect to the total mass of the heat transfer suppression sheet 10.

### <Inorganic particle>

As the inorganic particles, a single kind of inorganic particles may be used, or two or more kinds of inorganic particles may be used in combination. Regarding the kind of the inorganic particles, from the viewpoint of the effect of suppressing heat transfer, it is preferable to use a particle composed of at least one inorganic material, which is selected from an oxide particle, a carbide particle, a nitride particle, and an inorganic hydrate particle, and it is more preferable to use an oxide particle. In addition, the shape thereof is not particularly limited; however, it is preferable to include at least one selected from a nanoparticle, a hollow particle, and a porous particle, and specifically, it is also possible to use an inorganic balloon such as a silica nanoparticle, a metal oxide particle, a microporous particle, or a hollow silica particle, a particle composed of a thermally expandable inorganic material, a particle composed of a water-containing porous body, or the like.

When the average secondary particle diameter of the inorganic particles is 0.01 µm or more, the inorganic particles are easily available, and an increase in manufacturing cost can be suppressed. In addition, when the thickness thereof is 200 µm or less, a desired heat insulating effect can be obtained. Therefore, the average secondary particle diameter of the inorganic particles is preferably 0.01 µm or more and 200 µm or less, and more preferably 0.05 µm or more and 100 µm or less.

It is noted that when two or more kinds of inorganic particles having an effect of suppressing heat transfers different from each other are used in combination, the heat generating body can be cooled in multiple stages, and the endothermic action can be exhibited in a wider temperature range. Specifically, it is preferable to use a particle having a large diameter and a particle having a small diameter in combination. For example, as shown in the first and second embodiments, in a case where a nanoparticle (nano silica 4) is used as one kind of inorganic particle, it is preferable that the other kind of inorganic particle includes an inorganic particle (titania 3) composed of a metal oxide. Hereinafter, the inorganic particles will be described in more detail by defining an inorganic particle having a small diameter as the first inorganic particle and an inorganic particle having a large diameter as the second inorganic particle.

### <First inorganic particle>

### (Oxide particle)

The oxide particle has a high refractive index and has a strong effect of subjecting light to irregular reflection. Thus, when the oxide particle is used as the first inorganic particle, it is possible to suppress radiative heat transfer, particularly in a high temperature range in abnormal heat generation or the like. As the oxide particle, at least one kind of particle selected from silica, titania, zirconia, zircon, barium titanate, zinc oxide, and alumina can be used. That is, among the above-described oxide particles that can be used as the inorganic particles, one kind of oxide particle may be used, or two or more kinds of oxide particles may be used. In particular, silica is a component having high heat insulating properties, and titania is a component having a high refractive index as compared with other metal oxides, whereby the effect of subjecting light to irregular reflection and blocking radiant heat is high in a high temperature range of 500°C or higher. Thus, it is most preferable to use silica and titania as the oxide particle.

### (Average primary particle diameter of oxide particles: 0.001 µm or more and 50 µm or less)

Since the particle diameter of the oxide particles may affect the effect of reflecting the radiant heat, it is possible to obtain much higher heat insulating properties when the average primary particle diameter is limited to a predetermined range.

That is, when the average primary particle diameter of the oxide particles is 0.001 µm or more, the average primary particle diameter is sufficiently larger than the wavelength of light contributing to heating, and thus the light is efficiently subjected to irregular reflection. Thus, the radiative heat transfer of heat in the heat transfer suppression sheet is suppressed in a high temperature range of 500°C or higher, and the heat insulating properties can be improved much further.

On the other hand, when the average primary particle diameter of the oxide particles is 50 µm or less, the number of contact points between particles does not increase even when the particles are compressed, and it is difficult to form a path for conductive heat transfer. Thus, it is possible to reduce the influence on the heat insulating properties in a normal temperature range in which conductive heat transfer is dominant.

It is noted that in the present invention, the average primary particle diameter can be determined by observing particles with a microscope, comparing the particles with a standard scale, and averaging any 10 particles.

### (Nanoparticle)

In the present invention, the nanoparticle indicates a particle of a nanometer order having an average primary particle diameter of less than 1 µm, which is spherical or close to spherical. The nanoparticle suppresses conductive heat transfer due to having a low density, and when the nanoparticle is used as the first inorganic particle, the three-dimensionally linked empty holes 7 are further miniaturized, which makes it possible to obtain excellent heat insulating properties that suppress convective heat transfer. For this reason, it is preferable to use the nanoparticles from the viewpoint that the transfer of heat between the adjacent nanoparticles can be suppressed in a case where the battery is used in a normal temperature range.

Further, when nanoparticles having a small average primary particle diameter are used as the oxide particles, it is possible to suppress the rise of the conductive heat transfer of the heat transfer suppression sheet even in a case where the heat transfer suppression sheet is compressed due to expansion associated with the thermal runaway of the battery cell and the density inside the heat transfer suppression sheet is increased. It is considered that this is because the nanoparticles make it easy to form small voids between particles by electrostatic repulsion, and the bulk density is low, whereby the particles are filled to have cushioning properties.

In addition, where the heat insulating material of the heat transfer suppression sheet 10 according to the present embodiment contains nanoparticles, fine unevenness is formed on the surface of the heat insulating material. Therefore, as described above, the liquid repellency obtained by applying the liquid repellent substance 2 can be further improved.

It is noted that in the present invention, in a case where nanoparticles are used as the first inorganic particles, the material thereof is not particularly limited as long as it is in accordance with the definition of the nanoparticles. For example, since the silica nanoparticles have a small contact point between particles in addition to being a material having high heat insulating properties, the amount of heat transferred by the silica nanoparticles is small as compared with a case where silica particles having a large particle diameter are used. In addition, since the silica nanoparticles generally available have a bulk density of about 0.1 (g/cm³), the size (area) or the number of the contact points between the silica nanoparticles does not significantly increase, and thus the heat insulating properties can be maintained, for example, even in a case where the battery cells disposed on both sides of the heat transfer suppression sheet are thermally expanded and a large compressive stress is applied to the heat transfer suppression sheet. Therefore, it is preferable to use silica nanoparticles as the nanoparticles. Examples of the silica nanoparticles a wet type silica, a dry type silica, and an aerogel. However, the silica nanoparticles particularly suitable for the present embodiment will be described below.

In general, in the case of the wet type silica, particles are aggregated, whereas in the case of the dry type silica, particles can be dispersed. In a temperature range of 300°C or lower, conductive heat transfer is dominant in the transfer of heat. Thus, the dry type silica in which particles can be dispersed makes it possible to obtain excellent heat insulating performance as compared with the wet type silica.

It is noted that it is preferable that the heat transfer suppression sheet according to the present embodiment is manufactured by a manufacturing method in which a mixture including a material is processed into a sheet shape by a dry type method. Therefore, it is preferable to use, as the inorganic particles, a dry type silica having low thermal conductivity, a silica aerogel, or the like. In addition, as shown in the heat transfer suppression sheet according to the third embodiment, it is also preferable to use hydrophobic silica.

### (Average primary particle diameter of nanoparticles: 1 nm or more and 100 nm or less)

It is possible to obtain much higher heat insulating properties when the average primary particle diameter of the nanoparticles is limited to a predetermined range.

That is, when the average primary particle diameter of the nanoparticles is 1 nm or more and 100 nm or less, it is possible to suppress the convective heat transfer and the conductive heat transfer of heat in the heat transfer suppression sheet, particularly in a temperature range lower than 500°C, and thus it is possible to improve much further the heat insulating properties. In addition, even in a case where the compressive stress is applied thereto, the voids remaining between the nanoparticles and the contact points between the particles suppress the conductive heat transfer, so that the heat transfer suppression sheet can maintain heat insulating properties.

It is noted that the average primary particle diameter of the nanoparticles is more preferably 2 nm or more and still more preferably 3 nm or more. On the other hand, the average primary particle diameter of the nanoparticles is more preferably 50 nm or less and still more preferably 10 nm or less.

### (Inorganic hydrated particle)

When inorganic hydrate particles receive heat from a heat generating body and the temperature reaches or exceeds the thermal decomposition initiation temperature, the inorganic hydrate particles are thermally decomposed to release the water of crystallization contained in the inorganic hydrate particles themselves, thereby exhibiting a so-called "endothermic action" of lowering the temperature of the heat generating body and the periphery thereof. In addition, after the release of the water of crystallization, the porous body is formed, and the heat insulating action is exhibited by innumerable air holes.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% of water of crystallization, and it thermally decomposes to release the water of crystallization, thereby exhibiting an endothermic action, as shown in the following formula. Then, after the release of the water of crystallization, alumina (Al₂O₃), which is a porous body, is formed and functions as a heat insulating material.

2Al(OH)₃ → Al₂O₃ + 3H₂O

It is noted that, as will be described later, although the heat transfer suppression sheet 10 according to the present embodiment is suitable for being interposed, for example, between battery cells, the temperature rapidly rises to a temperature higher than 200°C, and the temperature continues to rise to around 700°C in a battery cell that has undergone thermal runaway. Therefore, the inorganic particles are preferably composed of an inorganic hydrate having a thermal decomposition initiation temperature of 200°C or higher.

Regarding thermal decomposition initiation temperature of each of the inorganic hydrates described above, it is about 200°C for aluminum hydroxide, about 330°C for magnesium hydroxide, about 580°C for calcium hydroxide, about 200°C for zinc hydroxide, about 350°C for iron hydroxide, about 300°C for manganese hydroxide, about 300°C for zirconium hydroxide, and about 300°C for gallium hydroxide, and all of the thermal decomposition initiation temperatures are almost overlapped with the temperature range of the rapid temperature rise of the battery cell that has undergone thermal runaway, which makes it possible to effectively suppress the temperature rise. Consequently, it can be said that the inorganic hydrates are preferable.

### (Average secondary particle diameter of inorganic hydrate particles: 0.01 µm or more and 200 µm or less)

In addition, in a case where inorganic hydrate particles are used as the first inorganic particles, the first inorganic particles (inorganic hydrate) around the center of the heat transfer suppression sheet 10 require a certain amount of time to reach the thermal decomposition temperature thereof when the average particle diameter thereof is too large. Thus, the first inorganic particles around the center of the sheet may not be thermally decomposed completely. For this reason, the average secondary particle diameter of the inorganic hydrate particles is preferably 0.01 µm to 200 µm and more preferably 0.05 µm to 100 µm.

### (Particles composed of thermally expandable inorganic material)

Examples of the thermally expandable inorganic material include vermiculite, bentonite, mica, and perlite.

### (Particles composed of water-containing porous body)

Specific examples of the water-containing porous body include zeolite, kaolinite, montmorillonite, acidic clay, diatomaceous earth, a wet type silica, a dry type silica, an aerogel, mica, and vermiculite.

### (Inorganic balloon)

The heat insulating material that is used in the present invention may include an inorganic balloon as the first inorganic particle.

When the inorganic balloon is included, it is possible to suppress the convective heat transfer or the conductive heat transfer of heat in the heat insulating material in a temperature range of lower than 500°C, and it is possible to improve much further the heat insulating properties of the heat insulating material.

As the inorganic balloon, at least one selected from a shirasu balloon, a silica balloon, a fly ash balloon, a barite balloon, and a glass balloon can be used.

### (Content of inorganic balloon)

The content of the inorganic balloon is preferably 60% by mass or less with respect to the total mass of the heat transfer suppression sheet.

### (Average particle diameter of inorganic balloon: 1 µm or more and 100 µm or less)

The average particle diameter of the inorganic balloon is preferably 1 µm or more and 100 µm or less.

### <Second inorganic particle>

In a case where the heat transfer suppression sheet contains two kinds of inorganic particles, the second inorganic particles are not particularly limited as long as the material, particle diameter, and the like are different from those of the first inorganic particles. It is also possible to use, as the second inorganic particles, an inorganic balloon such as an oxide particle, a carbide particle, a nitride particle, an inorganic hydrate particle, a silica nanoparticle, a metal oxide particle, a microporous particle, or a hollow silica particle, a particle composed of a thermally expandable inorganic material, a particle composed of a water-containing porous body, or the like, and details of these are as described above.

It is noted that the nanoparticles have extremely low conductive heat transfer and also make it possible to maintain excellent heat insulating properties even in a case where compressive stress is applied to the heat transfer suppression sheet. In addition, metal oxide particles such as titania have a high effect of blocking radiant heat. Further, when an inorganic particle having a large diameter and an inorganic particle having a small diameter are used, the inorganic particle having a small diameter enters the gaps between the inorganic particles having a large diameter, and thus a denser structure is formed, which makes it possible to improve the effect of suppressing heat transfer. Therefore, in a case where, for example, nanoparticles are used as the first inorganic particles, further, it is preferable that the heat transfer suppression sheet further contains, as the second inorganic particles, particles composed of a metal oxide having a diameter larger than the diameter of the first inorganic particles.

Examples of the metal oxide include silicon oxide, titanium oxide, aluminum oxide, barium titanate, zinc oxide, zircon, and zirconium oxide. In particular, titanium oxide (titania) is a component having a high refractive index as compared with other metal oxides, and the effect of subjecting light to irregular reflection and blocking radiant heat is high in a high temperature range of 500°C or higher. Thus, it is most preferable to use titania.

In a case where at least one kind of particle selected from a dry type silica particle and a silica aerogel is used as the first inorganic particle and at least one kind of particle selected from titania, zircon, zirconia, silicon carbide, zinc oxide, and alumina is used as the second inorganic particle, in order to obtain excellent heat insulating performance in a temperature range of 300°C or lower, the first inorganic particle is preferably 50% by mass or more, more preferably 60% by mass or more, and still more preferably 70% by mass or more with respect to the total mass of the inorganic particles. In addition, the content of the first inorganic particle is preferably 95% by mass or less, more preferably 90% by mass or less, and still more preferably 80% by mass or less with respect to the total mass of the inorganic particles.

On the other hand, in order to obtain excellent heat insulating performance in a temperature range exceeding 300°C, the content of the second inorganic particle is preferably 5% by mass or more, more preferably 10% by mass or more, and still more preferably 20% by mass or more with respect to the total mass of the inorganic particles. In addition, the content of the second inorganic particle is preferably 50% by mass or less, more preferably 40% by mass or less, and still more preferably 30% by mass or less with respect to the total mass of the inorganic particles.

### (Average primary particle diameter of second inorganic particles)

In a case where the heat transfer suppression sheet contains second inorganic particles composed of a metal oxide, it is possible to efficiently suppress radiative heat transfer in a high temperature range of 500°C or higher when the average primary particle diameter of the second inorganic particles is 1 µm or more and 50 µm or less. The average primary particle diameter of the second inorganic particles is still more preferably 5 µm or more and 30 µm or less, and most preferably 10 µm or less.

### (Content of inorganic particle)

In the present embodiment, when the total content of the inorganic particles in the heat transfer suppression sheet 10 is appropriately controlled, the heat insulating properties of the heat transfer suppression sheet 10 can be sufficiently ensured.

The total content of the inorganic particles is preferably 30% by mass or more, and more preferably 50% by mass or more with respect to the total mass of the heat transfer suppression sheet 10. In addition, when the total content of the inorganic particles is too large, the content of the fibers is relatively reduced. Thus, in order to obtain an appropriate strength of the heat transfer suppression sheet 10, the total content of the inorganic particles is preferably 80% by mass or less and more preferably 70% by mass or less with respect to the total mass of the heat transfer suppression sheet 10.

### <Fiber>

The heat transfer suppression sheet 10 according to the present embodiment includes at least one kind of fiber selected from an inorganic fiber and an organic fiber.

### <Organic fiber>

The organic fiber has an effect of imparting flexibility to the heat transfer suppression sheet 10 and also enhancing the effect of holding the inorganic particles and maintaining the strength and shape of the sheet. As a material of the organic fiber in the heat transfer suppression sheet 10, a binder fiber having a core-sheath structure can also be used in addition to the single-component organic fiber. The binder fiber having a core-sheath structure has a core portion extending in the longitudinal direction of the fiber and a sheath portion formed to cover the outer peripheral surface of the core portion.

In any case of a case where a single-component organic fiber is used or a case where a binder fiber having a core-sheath structure is used as the material of the organic fiber, a part of the surface of the fiber is melted by heating during the manufacturing of the heat transfer suppression sheet 10, and then, by subsequent cooling, inorganic particles or other fibers are fused to the periphery of the organic fiber. Therefore, it is possible to obtain excellent sheet strength.

The first organic material constituting the core portion and the second organic material constituting the sheath portion will be described below in a case where a binder fiber having a core-sheath structure is used as the material of the organic fiber.

### (First organic material)

In a case where a binder fiber having a core-sheath structure is used as the fiber, the first organic material constituting the core portion is not particularly limited as long as it has a melting point higher than a melting point of a sheath portion present on the outer peripheral surface of the core portion, that is, the melting point of the second organic material. Examples of the first organic material include at least one selected from polyethylene terephthalate, polypropylene, and nylon.

### (Second organic material)

In a case where a binder fiber having a core-sheath structure is used as the organic fiber, the second organic material constituting the sheath portion is not particularly limited as long as it is a material having a melting point lower than the melting point of the first organic material constituting the core portion. Examples of the second organic material include at least one selected from polyethylene terephthalate, polyethylene, polypropylene, and nylon.

It is noted that the melting point of the second organic material is preferably 90°C or higher and more preferably 100°C or higher. In addition, the melting point of the second organic material is preferably 150°C or lower and more preferably 130°C or lower.

### (Content of organic fiber)

In the present embodiment, in a case where the heat transfer suppression sheet 10 contains an organic fiber, the effect of improving the strength of the heat transfer suppression sheet 10 can be sufficiently obtained when the content of the organic fiber in the heat transfer suppression sheet 10 is appropriately controlled.

The content of the organic fiber is preferably 2% by mass or more, and more preferably 4% by mass or more with respect to the total mass of the heat transfer suppression sheet 10. In addition, when the content of the organic fiber is too large, the content of the inorganic particles is relatively reduced. Thus, in order to obtain the desired heat insulating performance, the content of the organic fiber is preferably 10% by mass or less and more preferably 8% by mass or less with respect to the total mass of the heat transfer suppression sheet 10.

### (Fiber length of organic fiber)

The fiber length of the organic fiber is not particularly limited; however, from the viewpoint of ensuring moldability and processability, the average fiber length of the organic fiber is preferably 10 mm or less.

On the other hand, from the viewpoint of improving the strength of the heat transfer suppression sheet 10, the average fiber length of the organic fiber is preferably 0.5 mm or more.

### <Inorganic fiber>

Since the inorganic fiber has excellent strength, the inorganic fiber acts as a backbone of the heat transfer suppression sheet 10, which makes it possible to obtain a high compressive strength. Therefore, the heat transfer suppression sheet 10 is interposed between the battery cells 20a, 20b, and 20c, and even in a case where the heat transfer suppression sheet 10 is pressed by these battery cells, the heat transfer suppression sheet 10 can maintain the shape thereof without being significantly deformed. In addition, since the inorganic fiber has a high high-temperature strength, the shape of the heat transfer suppression sheet 10 can be maintained even in a case where the heat transfer suppression sheet 10 is exposed to a high temperature.

As the inorganic fiber, a single kind of inorganic fiber may be used, or two or more kinds of inorganic fibers may be used in combination. Examples of the inorganic fiber include: ceramic-based fibers such as a silica fiber, an alumina fiber, an aluminosilicate fiber, a zirconia fiber, a carbon fiber, a soluble fiber, a refractory ceramic fiber, an aerogel composite material, a magnesium silicate fiber, an alkaline earth silicate fiber, a potassium titanate fiber, a silicon carbide fiber, and a potassium titanate whisker fiber; glass-based fibers such as a glass fiber, glass wool, and slag wool; rock wool; a basalt fiber; a mullite fiber; and a fiber based on a natural mineral such as wollastonite, as a mineral-based fiber other than those described above.

These inorganic fibers are preferable in terms of heat resistance, strength, availability, and the like. Among the inorganic fibers, a silica-alumina fiber, an alumina fiber, a silica fiber, a rock wool, an alkaline earth silicate fiber, or a glass fiber is particularly preferable from the viewpoint of handleability.

The cross-sectional shape of the inorganic fiber is not particularly limited, and examples thereof include a circular cross section, a flat cross section, a hollow cross section, a polygonal cross section, and a core cross section. Among these, a modified cross-sectional fiber having a hollow cross section, a flat cross section, or a polygonal cross section can be suitably used since the heat insulating properties are slightly improved.

The preferred lower limit of the average fiber length of the inorganic fiber is 0.1 mm, and the more preferred lower limit thereof is 0.5 mm. On the other hand, the preferred upper limit of the average fiber length of the inorganic fiber is 50 mm, and the more preferred upper limit thereof is 10 mm. When the average fiber length of the inorganic fibers is less than 0.1 mm, the entanglement between the inorganic fibers is less likely to occur, and there is a concern that the mechanical strength of the heat transfer suppression sheet may be reduced. On the other hand, when the average fiber length thereof exceeds 50 mm, although a reinforcing effect can be obtained, the inorganic fibers may not be able to be closely entangled with each other, or a single inorganic fiber is individually curled. As a result, continuous voids are likely to be generated, which may lead to a decrease in heat insulating properties.

The preferred lower limit of the average fiber diameter of the inorganic fiber is 1 µm, the more preferred lower limit thereof is 2 µm, and the still more preferred lower limit thereof is 3 µm. On the other hand, the preferred upper limit of the average fiber diameter of the inorganic fiber is 15 µm, and the more preferred upper limit thereof is 10 µm. When the average fiber diameter of the inorganic fiber is less than 1 µm, there is a concern that the mechanical strength of the inorganic fiber itself may be reduced. In addition, from the viewpoint of the influence on the health of the human body, the average fiber diameter of the inorganic fiber is preferably 3 µm or more. On the other hand, when the average fiber diameter of the inorganic fiber is more than 15 µm, there is a concern that solid heat transfer using the inorganic fiber as a medium may increase, which may lead to a decrease in heat insulating properties; in addition, there is a concern that the moldability and strength of the heat transfer suppression sheet may deteriorate.

### (Content of inorganic fiber)

In the present embodiment, in a case where the heat transfer suppression sheet 10 contains inorganic fibers, the content of the inorganic fibers is preferably 3% by mass or more and 15% by mass or less with respect to the total mass of the heat transfer suppression sheet.

In addition, the content of the inorganic fiber is more preferably 5% by mass or more and 10% by mass or less with respect to the total mass of the heat transfer suppression sheet. Thanks to setting the content to be such a content, the shape holding property or the resistance to the pressing force due to the inorganic fiber, the wind resistance, and the holding capacity of the inorganic particles are exhibited in a well-balanced manner. In addition, in a case where the heat transfer suppression sheet 10 contains an organic fiber and an inorganic fiber as the fibers, by appropriately controlling of the content of the inorganic fiber, the organic fiber and the inorganic fiber are entangled with each other to form a three-dimensional network; thus, the effect of holding the inorganic particles and the like can be improved much further.

### <Other blending materials>

It is noted that the heat transfer suppression sheet according to the present embodiment can further contain a bonding agent, a coloring agent, and the like, as necessary. All of these are useful for the reinforcement of the heat transfer suppression sheet, the improvement of moldability, and the like, and the total amount thereof with respect to the total mass of the heat transfer suppression sheet is preferably 10% by mass or less.

### (Hot melt powder)

As the bonding agent, for example, a hot melt powder can be used. The hot melt powder is a powder having a property of being melted by heating. When the hot melt powder is contained in a mixture obtained by mixing materials and then is heated, the hot melt powder is melted. Then, when cooled, the hot melt powder is cured in a state of containing fibers and inorganic particles which are the materials. Therefore, the shape retention of the heat transfer suppression sheet can be improved. Examples of the hot melt powder include hot melt powders having various melting points, and thus a hot melt powder having an appropriate melting point needs only to be selected depending on the manufacturing conditions for the heat transfer suppression sheet.

### (Content of hot melt powder)

In a case where the hot melt powder is contained in a mixture obtained by mixing materials, the shape retention of the heat transfer suppression sheet can be improved even in a case where the content of the hot melt powder is small. Therefore, the content of the hot melt powder is preferably 0.5% by mass or more, and more preferably 1% by mass or more with respect to the total mass of the mixture.

On the other hand, in a case where the content of the hot melt powder is increased, the content of the inorganic particles or the fiber is relatively decreased. Thus, in order to obtain the desired heat insulating performance, the content of the hot melt powder is preferably 5% by mass or less and more preferably 4% by mass or less with respect to the total mass of the mixture.

### [Manufacturing method for heat transfer suppression sheet]

### <Manufacturing method for heat transfer suppression sheet according to first embodiment>

An example of the manufacturing method for the heat transfer suppression sheet according to the first embodiment will be described below with reference to Fig. 1.

For example, the fiber (glass fiber 1), the inorganic particles (titania 3 and nano silica 4), the binder which is not shown in the drawing, and the like are charged into a mixer such as a V-type mixer in a predetermined ratio to produce a mixture. Thereafter, the obtained mixture is charged into a predetermined mold and pressurized with a press machine or the like. Then, the obtained molded body is heated and then the heated molded body is cooled, whereby a heat insulating material 9 processed into a sheet shape is obtained.

Thereafter, the heat insulating material 9 is immersed in a solution containing the liquid repellent substance 2 and then the heat insulating material 9 is dried, whereby a heat transfer suppression sheet 10 can be manufactured in which the liquid repellent substance 2 has adhered to the sheet surface.

In the manufacturing method according to the first embodiment, the heat insulating material 9 is immersed in a solution containing the liquid repellent substance 2, and then the heat insulating material 9 is dried. Thus, the liquid repellent substance 2 enters between the fine inorganic particles on the sheet surface, and the liquid repellent substance 2 can be allowed to adhere to the sheet surface without gaps, which makes it possible to obtain excellent liquid repellency.

In addition, as shown in Fig. 4, in a case where the empty holes 7 having the opening portion 7a are formed in the heat insulating material 9, the liquid repellent substance 2 enters the inside of the heat insulating material 9 through the opening portions 7a, and liquid repellency is also imparted to the inner wall portion of the empty holes 7 that are three-dimensionally linked. Therefore, even in a case where cracking occurs in a region of the sheet surface to which the liquid repellent substance 2 has adhered and the dew condensation water 5 or the like infiltrates the inside, the three-dimensionally linked empty holes 7 makes it possible to suppress the further infiltration of the dew condensation water. In addition, even in a case where the dew condensation water 5 or the like infiltrates the inside of the heat transfer suppression sheet 10 through the opening portion 7a during the use of the battery, the dew condensation water 5 or the like does not permeate into other portions, and the dew condensation water 5 or the like is easily discharged from the opening portion 7a since the inner wall portion of the empty holes 7 has liquid repellency.

### <Manufacturing method for heat transfer suppression sheet according to second embodiment>

An example of the manufacturing method for the heat transfer suppression sheet according to the second embodiment will be described below with reference to Fig. 3.

First, the fiber (glass fiber 1), the inorganic particles (titania 3 and nano silica 4), and the like, and a solution containing the liquid repellent substance 2 are mixed at a predetermined ratio, stirring is carried out with a stirrer, and then the obtained mixed liquid is dried. In this way, a mixture in which the liquid repellent substance 2 has adhered to at least a part of the surfaces of the fibers and the inorganic particles is obtained. Thereafter, the obtained mixture, a binder which is not shown in the drawing, and the like are charged into a predetermined mold, pressurized with a press machine or the like. Then the obtained molded body is heated and then cooled, whereby the heat transfer suppression sheet 10 processed into a sheet shape is obtained.

In the manufacturing method according to the second embodiment, the liquid repellent substance adheres to the surfaces of the fibers and the inorganic particles which are to be used as the materials. Thus, even in a case where the dew condensation water 5 or the like infiltrates from the surface to some extent, the liquid repellent substance does not completely permeate, and the fibers and the inorganic particles in which the liquid repellent substance 2 has adhered to the surface makes it possible to block the further infiltration of the dew condensation water. Therefore, it is possible to prevent a decrease in insulating properties due to the infiltration of the dew condensation water 5, and it is also possible to prevent a decrease in heat insulating properties due to the infiltration of the electrolytic solution by appropriately selecting the liquid repellent substance 2.

It is noted that as shown in the manufacturing method for the heat transfer suppression sheet according to the second embodiment, the liquid repellency can be improved much further in a case where the liquid repellent substance 2 is allowed to adhere to the surface of the material in advance, the adhered liquid repellent substance 2 is processed into a sheet shape, and then the liquid repellent substance 2 is further allowed to adhere to the sheet surface according to the manufacturing method according to the first embodiment.

As described above, it is preferable that the heat transfer suppression sheet 10 according to the first and second embodiments is manufactured by a dry type method. In a case where the dry type method is used, it is preferable to use, as the inorganic particle, at least one kind of particle selected from a dry type silica and a silica aerogel which is suitable for the dry type method.

### <Manufacturing method for heat transfer suppression sheet according to third embodiment>

An example of a manufacturing method of the heat transfer suppression sheet according to the third embodiment will be described below.

The fiber (glass fiber 1), the inorganic particles (hydrophobic silica) having liquid repellency, the binder which is not shown in the drawing, and the like are charged into a mixer such as a V-type mixer in a predetermined ratio to produce a mixture. Thereafter, the obtained mixture is charged into a predetermined mold and pressurized with a press machine or the like. Then, the obtained molded body is heated and then the heated molded body is cooled, whereby a heat transfer suppression sheet processed into a sheet shape is obtained.

In the manufacturing method according to the third embodiment, the inorganic particles to be used as a material have a liquid repellency effect. Thus, after the heat insulating material is processed into a sheet shape, it is not necessary to carry out a liquid repellent treatment on the heat insulating material which is at the stage of the material or is processed into a sheet shape, and thus it is possible to easily carry out manufacturing. It is noted that among the inorganic particles to be used as a material, only a part thereof may be hydrophobic silica, and the remaining portion may be other inorganic particles, and even in such a configuration, a water repellency effect can be obtained.

It is noted that as shown in the manufacturing method for the heat transfer suppression sheet according to the third embodiment, even in a case where inorganic particles having liquid repellency are used as the liquid repellent substance 2, the liquid repellency can be improved much further in a case where the inorganic particles having liquid repellency is processed into a sheet shape, and then the liquid repellent substance 2 is further allowed to adhere to the sheet surface according to the manufacturing method according to the first embodiment.

### <Other manufacturing methods>

The manufacturing method according to the present invention is not particularly limited as long as it makes it possible to manufacture a heat transfer suppression sheet that satisfies the requirements of the present invention. In addition to the manufacturing method for the heat transfer suppression sheet according to the first to third embodiments, examples of the manufacturing method for the heat transfer suppression sheet include a method of using, as the inorganic particles, particles obtained by allowing silicone, a synthetic resin, or the like to adhere to the surface of oxide particles and then carrying out a liquid repellent treatment. Then, a heat transfer suppression sheet having liquid repellency can be manufactured by the same method as the manufacturing method for the heat transfer suppression sheet according to the third embodiment.

### (Heating temperature)

In a case where a binder fiber having a core-sheath structure is used as the fiber, the melting point of the first organic material constituting the core portion is higher than the melting point of the second organic material constituting the sheath portion. Thus, in a case where the mixture is heated, such a heating temperature that allows the sheath portion to be melted while leaving the core portion unmelted is selected. When the heating temperature is appropriately adjusted in this way, the outer peripheral surface of the core portion can be adsorbed with other fibers or inorganic particles after cooling, and thus the inorganic particles can be held, and a three-dimensional and firm skeleton is also formed. As a result, the shape of the entire heat transfer suppression sheet can be maintained to have a much higher strength.

### (Thickness of heat transfer suppression sheet)

The thickness of the heat transfer suppression sheet according to the present embodiment is not particularly limited; however, it is preferably 0.05 mm or more and 10 mm or less. In a case where the thickness is 0.05 mm or more, it is possible to obtain sufficient compressive strength while ensuring heat insulating properties. On the other hand, in a case where the thickness is 10 mm or less, a size desired as a size of a battery pack can be realized.

### [Battery pack]

An example of a battery pack to which the heat transfer suppression sheet 10 according to the embodiment of the present invention is applied is as illustrated in Fig. 2. Here, the configuration and the effect of the battery pack will be specifically described with reference to Fig. 2. It is noted that, as described above, it is also possible to replace the heat transfer suppression sheet 10 shown in Fig. 2 with another heat transfer suppression sheet within the scope of the present invention.

As shown in Fig. 2, the battery pack 100 has a plurality of battery cells 20a, 20b, and 20c and the heat transfer suppression sheet according to the present embodiment, and the plurality of battery cells are connected in series or in parallel.

For example, as shown in Fig. 2, the heat transfer suppression sheet 10 according to the present embodiment is interposed between the battery cell 20a and the battery cell 20b and between the battery cell 20b and the battery cell 20c. Further, the battery cells 20a, 20b, and 20c and the heat transfer suppression sheet 10 are accommodated in the battery case 30.

It is noted that the heat transfer suppression sheet 10 is as described above.

In the battery pack 100 configured as described above, in a case where a certain battery cell is repeatedly subjected to temperature rise and cooling and the dew condensation water 5 is generated on the surface of the battery cell, it is possible to prevent short-circuiting between the battery cells since the heat transfer suppression sheet 10 that can prevent the infiltration of water is present between the battery cells.

In addition, in a case where the temperature of a certain battery cell rises significantly and the battery cell is damaged due to expansion or the like, when the liquid repellent substance adhered to the heat transfer suppression sheet 10 is appropriately selected, it is possible to suppress the infiltration of the electrolytic solution that has flown out; it is thus possible to prevent a chain of thermal runaway due to the infiltration of the electrolytic solution having a high temperature.

In the battery pack according to the present embodiment, the heat transfer suppression sheet 10 disposed between the battery cells 20a, 20b, and 20c and the battery case 30, and the battery cells may be in contact with each other or may have a gap therebetween. However, in a case where there is a gap between the heat transfer suppression sheet 10 and the battery cells 20a, 20b, and 20c, the deformation of the battery cell can be allowed to a large extent even in a case where the temperature of any of the plurality of battery cells rises and the volume thereof expands.

It is noted that the heat transfer suppression sheet 10 according to the present embodiment can be produced in various shapes by the manufacturing method therefor. Therefore, it can be adapted to any shape without being affected by the shapes of the battery cells 20a, 20b, and 20c and the battery case 30. Specifically, it can be applied to not only a rectangular battery but also a cylindrical battery, a flat battery, and the like.

As described above, various embodiments have been described above. However, it goes without saying that the present invention is not limited to such examples. It is obvious to those skilled in the art that various changes or modifications can be made within the scope described in the claims, and it is understood that those various changes or modifications naturally belong to the technical scope of the present invention. In addition, each constitutional component in the above embodiment may be randomly combined without departing from the spirit of the invention.

This application is based on a Japanese patent application filed on June 27, 2022 (Japanese Patent Application No. 2022-103045), the contents of which are incorporated herein by reference.

### REFERENCE SIGNS LIST

1: glass fiber
2: liquid repellent substance
3: titania
4: nano silica
5: dew condensation water
6: organic fiber
7: empty hole
7a: opening portion
8: inflow and outflow water path
9, 19: heat insulating material
10: heat transfer suppression sheet
14: inorganic particle
20a, 20b, 20c: battery cell
30: battery case
100: battery pack

## Claims

1. A heat transfer suppression sheet to be interposed between a plurality of battery cells, the heat transfer suppression sheet comprising:
at least one kind of fiber selected from an inorganic fiber and an organic fiber; and
a liquid repellent substance having a surface tension smaller than a surface tension of water.

2. The heat transfer suppression sheet according to claim 1, comprising inorganic particles, wherein at least a part of the inorganic particles are the liquid repellent substance.

3. The heat transfer suppression sheet according to claim 2, wherein the liquid repellent substance is hydrophobic silica.

4. The heat transfer suppression sheet according to claim 1, comprising inorganic particles,
wherein the liquid repellent substance adheres to at least a part of a surface of the heat transfer suppression sheet, a surface of the inorganic particle in an inside of the heat transfer suppression sheet, and a surface of the fiber in an inside of the heat transfer suppression sheet.

5. The heat transfer suppression sheet according to claim 4, wherein the liquid repellent substance is at least one selected from paraffin-based oils, naphthene-based oils, a hydrocarbon-based synthetic oil, an ester-based synthetic oil, animal and vegetable oils and fats, a silicone resin, a fluororesin, a rosin-based sizing agent, and an alkyl ketene dimer sizing agent.

6. The heat transfer suppression sheet according to claim 4, wherein the inorganic particle is a particle composed of at least one kind of inorganic material selected from an oxide particle, a carbide particle, a nitride particle, and an inorganic hydrate particle.

7. The heat transfer suppression sheet according to claim 6, wherein the inorganic particle includes at least one kind of particle selected from a dry type silica particle and a silica aerogel.

8. The heat transfer suppression sheet according to claim 7, wherein the inorganic particles further include at least one kind of particle selected from titania, zircon, zirconia, silicon carbide, zinc oxide, and alumina.

9. The heat transfer suppression sheet according to claim 1, wherein the surface tension of the liquid repellent substance is smaller than a surface tension of an electrolytic solution contained in the battery cell.

10. The heat transfer suppression sheet according to claim 9, wherein the surface tension of the liquid repellent substance is 45 mN/m or less.

11. The heat transfer suppression sheet according to claim 10, wherein the liquid repellent substance is at least one selected from a silicone resin and a fluororesin.

12. The heat transfer suppression sheet according to claim 1, wherein the heat transfer suppression sheet has a plurality of three-dimensionally linked empty holes, and
the empty holes are open toward a surface of the heat transfer suppression sheet.

13. A battery pack comprising:
a plurality of battery cells; and
the heat transfer suppression sheet according to any one of Claims 1 to 12,
wherein the plurality of battery cells are connected in series or in parallel.
